# EUROPÄISCHE PATENTANMELDUNG

(11) **EP 4 418 523 A1**
(43) Veröffentlichungstag der Anmeldung: **21.08.2024**
(21) Anmeldenummer: 24155313.0
(22) Anmeldetag: 01.02.2024
(51) Int. Cl.: H02P 5/74, H02P 6/04, H02P 6/26

(54) **ANTRIEBSSYSTEM**

(30) Priorität: 17.02.2023 BE 202305116
(71) Anmelder: Miele & Cie. KG, 33332 Gütersloh (DE)
(72) Erfinder: Kiefer, Andreas, 53125 Bonn (DE); Schaefer-van den Boom, Klaus, 53489 Sinzig (DE); Rech, Thomas, 53881 Euskirchen (DE)

(57) **Zusammenfassung**

Die Erfindung betrifft ein Antriebssystem (1) mit wenigstens einem ersten Einphasen-Motor (M1a) und mit wenigstens einem Wechselrichter (15) mit einer ersten Halbbrücke (12) und mit einer zweiten Halbbrücke (13), wobei der Wechselrichter (15) ausgebildet und eingerichtet ist, den ersten Einphasen-Motor (M1a) mittels beider Halbbrücken (12, 13) zu betreiben. Das Antriebssystem (1) ist gekennzeichnet durch wenigstens einen zweiten Einphasen-Motor (M1b), wobei der Wechselrichter (15) ferner ausgebildet und eingerichtet ist, den zweiten Einphasen-Motor (M1b) mittels der ersten Halbbrücke (12) und der zweiten Halbbrücke (13) zu betreiben, wobei die erste Halbbrücke (12) mittels eines Umschalters (16) zwischen dem ersten Einphasen-Motor (M1a) und dem zweiten Einphasen-Motor (M1b) umgeschaltet werden kann und wobei die zweite Halbbrücke (13) sowohl mit dem ersten Einphasen-Motor (M1a) als auch mit dem zweiten Einphasen-Motor (M1b) verbunden ist.

## Beschreibung

Die Erfindung betrifft ein Antriebssystem sowie ein Haushaltsgerät mit einem derartigen Antriebssystem.

Zu den bekannten elektrischen Motoren gehören auch die Synchronmotoren, welche einphasig mit Wechselstrom oder mehrphasig mit Drehstrom betrieben werden können. In jedem Fall wird ein konstant magnetisierter Läufer verwendet, welcher auch als Rotor bezeichnet werden kann. Hierzu können Permanentmagnete oder eine elektromagnetische Fremderregung verwendet werden. Die Bezeichnung Synchronmotor resultiert daraus, dass der Rotor von einem bewegten magnetischen Drehfeld im Ständer, auch Stator genannt, synchron mitgenommen wird. Somit weist der Synchronmotor im Betrieb eine zur Wechselspannung synchrone Bewegung auf, dessen Drehzahl über die Polpaarzahl des Stators des Synchronmotors mit der Frequenz der Wechselspannung verknüpft ist.

Mehrsträngige Permanentmagnet-Synchronmotoren werden üblicherweise über einen Frequenzumrichter betrieben, wodurch ein geregelter Betrieb ermöglicht wird, indem Drehrichtung, Drehzahl und Drehmoment des Synchronmotors über die Frequenz und Amplitude der Ausgangswechselspannung des Frequenzumrichters bzw. dessen Wechselrichters vorgegeben werden können. Die Ausgangsspannung des Frequenzumrichters kann mittels Pulsweitenmodulation erfolgen. In jedem Fall kann vom Wechselrichter des Frequenzumrichter ein elektrisches Drehfeld mit variablen Spannungsamplituden und bzw. oder mit variabler Drehfrequenz erzeugt werden, was als feldorientierte Regelung bezeichnet werden kann. Dies kann das Drehverhalten des Synchronmotors z.B. beim Anlauf sowie in Abhängigkeit der anzutreibenden Last gezielt beeinflussen. Für mehrsträngige Permanentmagnet-Synchronmotoren ist ferner die Brushless-DC-Ansteuerung bekannt.

Nachteilig ist hierbei, dass derartige Frequenzumrichter zusätzliche Kosten verursachen und zusätzlichen Bauraum benötigen können. Neben dem Frequenzumrichter selbst können diese Kosten durch weitere Elektronik im Antriebssystem entstehen. Gerade diese Kosten sind bei verschiedenen einfachen Anwendungen wie z.B. bei einfachen Pumpen wie z.B. bei Laugenpumpen in Waschmaschinen höchst unerwünscht, weil die durch den Frequenzumrichter geschaffenen Möglichkeiten der Regelung bzw. der Steuerung des Synchronmotors für diese Anwendungen gar nicht benötigt werden und sich somit die Mehrkosten des Frequenzumrichters nicht rentieren. Zu derartigen einfachen Anwendungen wie z.B. bei Laugenpumpen in Waschmaschinen gehören das Abpumpen der Lauge aus dem Waschraum oder das Umfluten. In beiden Fällen ist ein geregelter Betrieb des jeweiligen Pumpenmotors nicht erforderlich.

Als kostengünstige Alternative zu mittels Frequenzumrichtern betriebenen Synchronmotoren ist es bei einfachen Anwendungen wie z.B. bei Laugenpumpen in Waschmaschinen bekannt ungeregelte Einphasen-Synchronmotoren als Antriebe z.B. von Laugenpumpen einzusetzen. Hierbei werden üblicherweise permanenterregte Einphasen-Synchronmotoren eingesetzt. Diese Motoren können auch mehrpolig ausgeführt sein, das bedeutet, dass sie eine Polpaarzahl > 1 aufweisen und damit die elektrische Frequenz über den Faktor p einem Vielfachen der mechanischen Drehzahl entspricht.

Wie bereits allgemein erwähnt ist es auch bei permanenterregten Einphasen-Synchronmotoren vorteilhaft, dass diese im Betrieb eine zur Wechselspannung synchrone Bewegung ausführen, deren Drehzahl über die Polpaarzahl des Stators mit der Frequenz der Wechselspannung verknüpft ist. Somit ist der Betrieb eines permanenterregten Einphasen-Synchronmotors mit der Frequenz der Wechselspannung des Netzes sehr einfach möglich und es kann auf kostenintensive Steuerungen sowie Frequenzumrichter verzichtet werden. Vielmehr ist eine einfache Ansteuerung des Einphasen-Synchronmotors über eine Schalteinheit (Relais oder Triac) ausreichend, welche von einer Steuerungseinheit betrieben werden kann. Dies kommt insbesondere einfachen Anwendungen wie z.B. dem Einsatz von Laugenpumpen in Waschmaschinen zugute, welche ungeregelt mit konstanter Drehzahl betrieben werden.

Weiterhin ist eine Ansteuerung des Einphasen-Synchronmotors über eine H-Brücke als Wechselrichter möglich, welche von einer Steuerungseinheit betrieben werden kann.

In Haushaltsgeräten kommen häufig mehrere Kleinantriebe wie beispielsweise Einphasen-Synchronmotoren zum Einsatz, die vermehrt eine höhere Funktionalität aufweisen und dadurch elektronisch geregelt werden sollen. Zu diesen Funktionalitäten gehört unter anderem eine vom Versorgungsnetz unabhängige Motorspannung und Frequenz zur Reduzierung der Ländervarianten oder eine Drehrichtungs- und Drehzahlregelung sowie eine Lastsensierung im Antriebssystem. Diese höhere Funktionalität führt in der Regel zu höheren Kosten im Antriebssystem.

Um dem entgegenzuwirken, werden geregelte Kleinmotoren mit einem Wicklungsstrang verwendet und einphasig angesteuert, um die Kosten am Motor und der Ansteuerelektronik zu senken. Dies reduziert jedoch nicht den Aufwand und damit die Kosten der Ansteuerung.

Bei der Ansteuerung von mehreren geregelten Antrieben wird heutzutage jeweils ein eigener Wechselrichter verwendet, d.h. ein Wechselrichter pro geregeltem Antrieb. Somit ist für jeden weiteren geregelten Antrieb ein eigener Wechselrichter notwendig, welcher Platz auf der Elektronik erfordert und vor allem höhere Bauteilkosten verursacht. Insbesondere bei Antrieben, die nicht gleichzeitig laufen müssen, wird so eine unnötige Elektronikbeschaltung verwendet.

Ungeregelte Antriebe, wie z.B. die heutige Ablaufpumpe im Waschautomaten, werden über ein Relais mit der Netzspannung beaufschlagt.

Der Erfindung stellt sich somit das Problem, ein Antriebssystem der eingangs beschriebenen Art bereitzustellen, um wenigstens zwei einphasige Motoren mit einem geringeren elektronischen bzw. schaltungstechnischen Aufwand als bisher bekannt, vorzugsweise geregelt, betreiben zu können. Dies soll insbesondere kostengünstiger, bauraumsparender, energiesparender und bzw. oder mit einer geringeren Abwärme als bisher bekannt erfolgen können. Zumindest soll eine Alternative zu bekannten derartigen Antriebssystemen geschaffen werden.

Erfindungsgemäß wird dieses Problem durch ein Antriebssystem sowie durch ein Haushaltsgerät mit den Merkmalen der unabhängigen Ansprüche gelöst. Vorteilhafte Ausgestaltungen und Weiterbildungen der Erfindung ergeben sich aus den nachfolgenden Unteransprüchen.

Somit betrifft die Erfindung ein Antriebssystem mit wenigstens einem ersten Einphasen-Motor und mit wenigstens einem Wechselrichter mit einer ersten Halbbrücke und mit einer zweiten Halbbrücke, wobei der Wechselrichter ausgebildet und eingerichtet ist, den ersten Einphasen-Motor mittels beider Halbbrücken zu betreiben.

Das Antriebssystem ist gekennzeichnet durch wenigstens einen zweiten Einphasen-Motor, wobei der Wechselrichter ferner ausgebildet und eingerichtet ist, den zweiten Einphasen-Motor mittels der ersten Halbbrücke und der zweiten Halbbrücke zu betreiben, wobei die erste Halbbrücke mittels eines Umschalters zwischen dem ersten Einphasen-Motor und dem zweiten Einphasen-Motor umgeschaltet werden kann und wobei die zweite Halbbrücke sowohl mit dem ersten Einphasen-Motor als auch mit dem zweiten Einphasen-Motor verbunden ist.

Somit können zwei Einphasen- bzw. einsträngige Motoren alternativ zueinander mittels desselben Wechselrichters bzw. Frequenzumrichters betrieben werden. Dies kann den elektronischen bzw. schaltungstechnischen Aufwand entsprechend reduzieren. Dies kann insbesondere geregelt erfolgen. Der Wechselrichter stellt eine H-Brücke dar.

Mit anderen Worten können auf diese Art und Weise gleichzeitig wenigstens zwei Einphasen-Motoren mittels eines Wechselrichters betrieben und entsprechend deren Vorteile genutzt werden. Dies kann den schaltungstechnischen Aufwand entsprechend reduzieren, um zwei elektrische Motoren betreiben zu können, da der Wechselrichter alternativ doppelt verwendet werden kann. Dies kann die Kosten hinsichtlich Material und Montage ebenso reduzieren wie den Platzbedarf, den Energieverbrauch und bzw. oder die Wärmeerzeugung. Dies mittels eines Umschalters der ersten Halbbrücke umzusetzen kann insbesondere den schaltungstechnischen Aufwand minimieren.

Der Wechselrichter kann entweder aus einem Gleichspannungsnetzteil oder aus einem Gleichrichter mit Zwischenkreis gespeist werden. Die Versorgungsspannung kann dabei frei wählbar sein und sollte zu der Wicklungsauslegung der beiden Einphasen-Motoren passen. Der Wechselrichter kann über eine Regelungseinheit bzw. eine Steuerungseinheit in einer Art und Weise angesteuert werden, dass die beiden Einphasen-Motoren drehrichtungs- und bzw. oder drehzahlgeregelt angesteuert werden können.

Der Umschalter bzw. die Umschalteinrichtung kann ein Relais, ein Leistungstransistor oder ein sonstiger elektronisch gesteuerter Schalter sein.

Durch Erweiterung des Umschalters können beliebig viele einphasige Motoren mit einem derartigen Wechselrichter bzw. mit einer H-Brücke und dem zugehörigen Netzfilter (Gleichrichter/Zwischenkreis oder Netzteil) und der Regeleinheit bzw. Steuerungseinheit angesteuert und geregelt betrieben werden. Der Zusatzaufwand kann für jede weitere Antriebseinheit bzw. für jeden weiteren Einphasen-Motor auf einen zusätzlichen Umschalter bzw. auf ein zusätzliches Schaltelement (Bsp. Relais) reduziert werden. Derartige Schaltelemente können zur Ansteuerung eines ungeregelten Einphasen-Motors schon heute verwendet werden, z.B. bei Ablaufpumpen im Waschautomaten oder im Geschirrspüler. Das bedeutet, dass überall dort, wo ein geregelter Antrieb Einsatz findet, ein weiterer bestehender ungeregelter Antrieb ohne nennenswerte Mehrkosten durch einen zweiten geregelten Antrieb ersetzt und damit eine zusätzliche Funktionserweiterung realisiert werden kann.

Als einphasige bzw. einsträngige Motoren können einphasige bzw. einsträngige Synchronmotoren und insbesondere einphasige bzw. einsträngige permanenterregte Synchronmotoren verwendet werden. Ferner können auch andere einphasige bzw. einsträngige Motoren mit dieser Schaltung betrieben werden, z.B. Spaltpolmotoren, Brushless-DC-Motoren oder auch andere elektromagnetische Aktoren, wie zum Beispiel Ventile oder Heizungen.

Auch müssen die Motoren nicht zwangsweise den gleichen Funktionsumfang haben. So könnte zum Beispiel einer dieser Motoren über eine Frequenzstellung drehzahlvariabel angesteuert werden, der zweite Motor aber ein komplett ungeregelter Motor sein. Eine Anwendung hierfür ist z. B. in einem Waschautomaten eine drehzahlgeregelte Umflutpumpe und eine einfache ungeregelte Ablaufpumpe. Trotzdem hätte man hier den Vorteil der Spannungsstellung, so dass unterschiedliche Netzspannungen durch Ländervarianten keine zusätzlichen Motorvarianten der ungeregelten Pumpe generieren.

In einer bevorzugten Ausführungsform sind beide Antriebe dahingehend ausgelegt, dass sie ähnliche Motorströme und ein ähnliches thermisches Verhalten aufweisen. Dies kann insbesondere dann von Vorteil sein, wenn die Antriebe keinen separaten Thermoschutz aufweisen, sondern eine thermische Überwachung auf der Elektronik in Form einer Hardwarebeschaltung und einer Softwaresicherheit realisiert wird. In diesem Fall muss es nicht nötig sein, den Schaltzustand der Umschalteinrichtung zu überwachen.

Eine Anwendung könnte eine solche Ansteuerung bzw. ein derartiges Antriebssystem in Waschautomaten finden, in denen verschiedene Pumpen zum Einsatz kommen, z.B. die Umflutpumpe zum Umwälzen der Lauge und zum zielgerichteten Benetzen der Wäsche im Waschprozess sowie die Ablaufpumpe zum Entleeren des Bottiches.

Eine weitere Anwendung kann der Geschirrspüler sein, indem eine Ablaufpumpe zum Entleeren der Spüllauge und ein Trocknungsgebläse zur Trocknung der Geschirrbeladung an einen solchen Wechselrichter angeschlossen werden können.

In Backöfen und ähnlichen Geräten wie z.B. Dampfgarern sind ebenfalls mehrere Lüfter sowie teilweise Pumpen verbaut, die ebenfalls mit dieser Wechselrichterelektronik betrieben werden können. Somit könnte eine Trennung der Wrasenabfuhr in einem Backofen durch einen ersten Lüfter und eines zweiten Lüfters zur Kühlung der Geräteelektronik erfolgen.

Auch Stellantriebe, Klappen- oder Ventilsteuerungen in Haushaltsgeräten sind im Sinne dieser Erfindung mit geringerem Elektronikaufwand und Platzbedarf zu realisieren.

Gemäß einem Aspekt der Erfindung ist der Umschalter als Umschalt-Relais ausgebildet. Dies kann eine konkrete Umsetzung darstellen. Insbesondere können auf diese Art und Weise die Eigenschaften und Vorteile eines Relais genutzt werden.

Gemäß einem weiteren Aspekt der Erfindung entspricht die Ruhestellung des Umschalt-Relais dem Einphasen-Motor, welcher häufiger verwendet wird. Dies kann die Betätigung bzw. die Bestromung des Umschalt-Relais minimieren.

Gemäß einem weiteren Aspekt der Erfindung weist das Antriebssystem eine Steuerungseinheit auf, welche ausgebildet und eingerichtet ist, die erste Halbbrücke und die zweite Halbbrücke zu betreiben. Somit kann auch hinsichtlich der Umsetzung der Steuerung der Halbbrücken bzw. des Wechselrichters der Aufwand etc. reduziert werden, indem beide Halbbrücken von einer gemeinsamen Steuerungseinheit betrieben bzw. gesteuert werden können.

Gemäß einem weiteren Aspekt der Erfindung ist die Steuerungseinheit ausgebildet und eingerichtet, entweder mittels der ersten Halbbrücke und der zweiten Halbbrücke den ersten Einphasen-Motor oder mittels der ersten Halbbrücke und der zweiten Halbbrücke den zweiten Einphasen-Motor zu betreiben. Dies kann eine konkrete Umsetzung darstellen.

Gemäß einem weiteren Aspekt der Erfindung weist die erste Halbbrücke einen ersten Messwiderstand auf und die zweite Halbbrücke einen zweiten Messwiderstand auf. Dies kann es ermöglichen, die Ströme der jeweiligen Halbbrücken bzw. des Wechselrichters im Betrieb, insbesondere seitens der Steuerungseinheit, zu erfassen und beispielsweise zur Regelung des jeweiligen einphasigen Motors zu verwenden.

Gemäß einem weiteren Aspekt der Erfindung ist die Steuerungseinheit ausgebildet und eingerichtet, entweder den ersten Messwiderstand und den zweiten Messwiderstand zur Strommessung und zur Regelung des ersten Einphasen-Motors oder den ersten Messwiderstand und den zweiten Messwiderstand zur Strommessung und zur Regelung des zweiten Einphasen-Motors zu verwenden. Hierdurch können der erste und der zweite Messwiderstand, vergleichbar der ersten und zweiten Halbbrücke, sowohl zum Betrieb des ersten Einphasen-Motors als auch zum Betrieb des zweiten Einphasen-Motors verwendet werden. Alternativ kann nur ein Messwiderstand, d.h. der erste oder der zweite Messwiderstand, vorhanden sein und zur Strommessung und Steuerung des ersten oder zweiten Einphasen-Motors verwendet werden.

Gemäß einem weiteren Aspekt der Erfindung weist das Antriebssystem einen Gleichrichter auf, welcher ausgebildet und eingerichtet ist, eine Wechselspannung eines Spannungseingangs des Antriebssystems zu erhalten und eine Gleichspannung der ersten Halbbrücke und der zweiten Halbbrücke zur Verfügung zu stellen. Hierdurch kann eine Umsetzung des Antriebssystems an einer Wechselspannung erfolgen.

Gemäß einem weiteren Aspekt der Erfindung weist das Antriebssystem einen Glättungskondensator auf, welcher ausgebildet ist, die Gleichspannung des Ausgangs des Gleichrichters zu glätten. Hierdurch kann eine Restwelligkeit der gleichgerichteten Wechselspannung reduziert werden.

Gemäß einem weiteren Aspekt der Erfindung ist der erste Einphasen-Motor ein erster Einphasen-, vorzugsweise permanenterregter, Synchronmotor und bzw. oder der zweite Einphasen-Motor ist ein zweiter Einphasen-, vorzugsweise permanenterregter, Synchronmotor. Dies kann die Umsetzung des Antriebssystems mit derartigen Motoren ermöglichen.

Die vorliegende Erfindung betrifft auch ein Haushaltsgerät, vorzugsweise eine Waschmaschine, ein Geschirrspüler, ein Backofen oder ein Dampfgarer, mit wenigstens einem Antriebssystem wie zuvor beschrieben. Hierdurch können die Eigenschaften und die Vorteile eines erfindungsgemäßen Antriebssystems bei einem Haushaltsgerät umgesetzt und genutzt werden.

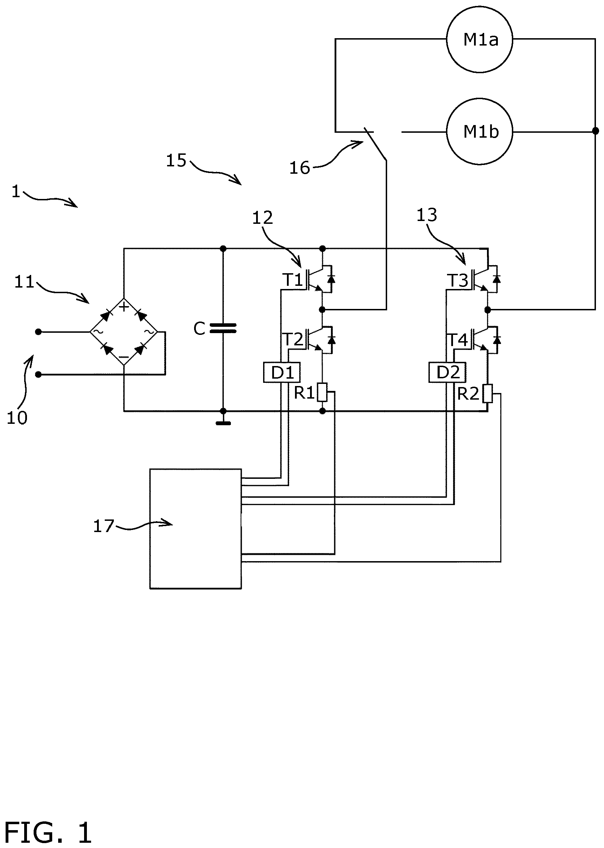

Ein Ausführungsbeispiel der Erfindung ist in den Zeichnungen rein schematisch dargestellt und wird nachfolgend näher beschrieben. Es zeigt
- Figur 1: ein Schaltungsbild eines erfindungsgemäßen Antriebssystems zum Betreiben von zwei Einphasen-Motoren im Betrieb des ersten Einphasen-Motors; und

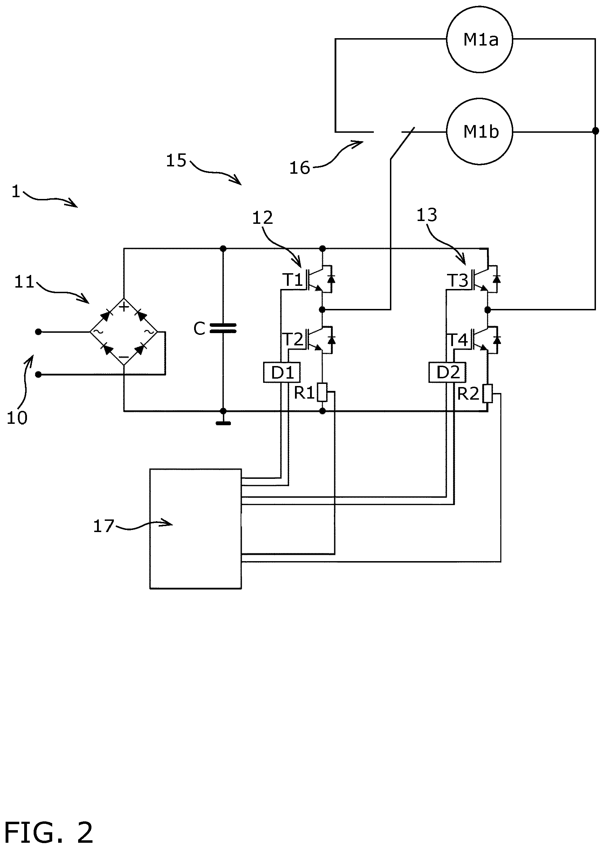

- Figur 2: das Schaltungsbild der Figur 1 im Betrieb des zweiten Einphasen-Motors.

Es ist bekannt, ein Antriebssystem 1 über einen Spannungseingang 10 an einer Wechselspannung zu betreiben, indem die Wechselspannung des Spannungseingangs 10 über einen Gleichrichter 11 in eine Gleichspannung gewandelt und dann mittels eines Glättungskondensators C geglättet wird. Die Gleichspannung am Ausgang des Gleichrichters 11 kann auch als Zwischenkreis bzw. als Zwischenkreisspannung bezeichnet werden.

Die geglättete Gleichspannung des Zwischenkreises wird nun parallel an eine erste Halbbrücke 12 und an eine zweite Halbbrücke 13 gelegt, welche gemeinsam einen Wechselrichter 15 bilden. Die erste Halbbrücke 12 weist einen ersten Leistungshalbleiter T1, einen zweiten Leistungshalbleiter T2, einen ersten Treiber D1 und einen ersten Messwiderstand R1 als ersten Shunt R1 auf. Die zweite Halbbrücke 13 weist einen dritten Leistungshalbleiter T3, einen vierten Leistungshalbleiter T4, einen zweiten Treiber D2 und einen zweiten Messwiderstand R2 als zweiten Shunt R2 auf.

Es ist ein erster Einphasen-Motor M1a als erster Einphasen- permanenterregter Synchronmotor M1a vorgesehen, welcher direkt bzw. fest mit der zweiten Halbbrücke 13 verbunden ist. Es ist ferner ein zweiter Einphasen-Motor M1b als zweiter Einphasenpermanenterregter Synchronmotor M1b vorhanden, welcher ebenfalls direkt bzw. fest mit der zweiten Halbbrücke 13 verbunden ist. Sowohl der erste Einphasen-Motor M1a als auch der zweite Einphasen-Motor M1b sind indirekt über einen Umschalter 16 in Form eines Umschalt-Relais 16 mit der ersten Halbbrücke 12 verbunden, so dass durch Umschalten des Umschalters 16 entweder der erste Einphasen-Motor M1a oder der zweite Einphasen-Motor M1b mit der ersten Halbbrücke 12 verbunden ist. Entsprechend kann erfindungsgemäß durch das Umschalten des Umschalters 16 entweder der erste Einphasen-Motor M1a oder der zweite Einphasen-Motor M1b vom Wechselrichter 15 betrieben werden.

Um den Wechselrichter 15 bzw. dessen Halbbrücken 12, 13 entsprechend anzusteuern, ist eine Steuerungseinheit 17 in Form eines Rechners 17 über die zwei Treiber D1, D2 jeweils mit den vier Leistungshalbleitern T1-T4 verbunden. Auch sind die zwei Messwiderstände R1, R2 mit der Steuerungseinheit 17 verbunden, so dass im Betrieb die Ströme im ersten Einphasen-Motor M1a sowie im zweiten Einphasen-Motor M1b erfasst und der erste Einphasen-Motor M1a sowie der zweite Einphasen-Motor M1b hierauf basierend von der Steuerungseinheit 17 geregelt betrieben werden können. Der Gleichrichter 11, der Zwischenkreis, der Wechselrichter 15 und die Steuerungseinheit 17 können zusammen auch als Frequenzumrichter bezeichnet werden.

Der erste Einphasen-Motor M1a kann ein erster einfacher Antrieb und der zweite Einphasen-Motor M1b ein zweiter einfacher Antrieb eines Haushaltsgeräts sein. Der Umschalter 16 als Umschalt-Relais 16 kann im Ruhezustand denjenigen Einphasen-Motor M1a, M1b mit der ersten Halbbrücke 12 verbinden, welcher häufiger betrieben wird.

In jedem Fall können erfindungsgemäß die Vorteile des Betreibens eines elektrischen Motor M1a, M1b mittels des Wechselrichters 15 bzw. mittels eines Frequenzumrichters sowohl bei dem ersten Einphasen-Motor M1a als auch bei dem zweiten Einphasen-Motor M1b genutzt werden, insbesondere die Vorteile eines jeweiligen stromgeregelten Betreibens.

Gleichzeitig können der schaltungstechnische Aufwand hierfür sowie die Herstellungskosten, der Platzbedarf, der Energieverbrauch sowie die Wärmeabgabe des Antriebssystems 1 geringgehalten werden.

### Bezugszeichenliste (Bestandteil der Beschreibung)

- C: Glättungskondensator
- D1: erster Treiber
- D2: zweiter Treiber
- M1a: erster einphasen (permanenterregter) (Synchron-)Motor
- M1b: zweiter einphasen (permanenterregter) (Synchron-)Motor
- R1-R2: Messwiderstände; Shunts
- T1-T4: Leistungshalbleiter
- 1: Antriebssystem
- 10: Spannungseingang
- 11: Gleichrichter
- 12: erste Halbbrücke
- 13: zweite Halbbrücke
- 15: Wechselrichter
- 16: Umschalter; Umschalt-Relais
- 17: Steuerungseinheit; Rechner

## Patentansprüche

1. Antriebssystem (1)
mit wenigstens einem ersten Einphasen-Motor (M1a), und
mit wenigstens einem Wechselrichter (15) mit einer ersten Halbbrücke (12) und mit einer zweiten Halbbrücke (13),
wobei der Wechselrichter (15) ausgebildet und eingerichtet ist, den ersten Einphasen-Motor (M1a) mittels beider Halbbrücken (12, 13) zu betreiben,
**gekennzeichnet durch**
wenigstens einen zweiten Einphasen-Motor (M1b),
wobei der Wechselrichter (15) ferner ausgebildet und eingerichtet ist, den zweiten Einphasen-Motor (M1b) mittels der ersten Halbbrücke (12) und der zweiten Halbbrücke (13) zu betreiben,
wobei die erste Halbbrücke (12) mittels eines Umschalters (16) zwischen dem ersten Einphasen-Motor (M1a) und dem zweiten Einphasen-Motor (M1b) umgeschaltet werden kann, und
wobei die zweite Halbbrücke (13) sowohl mit dem ersten Einphasen-Motor (M1a) als auch mit dem zweiten Einphasen-Motor (M1b) verbunden ist.

2. Antriebssystem (1) nach Anspruch 1,
wobei der Umschalter (16) als Umschalt-Relais (16) ausgebildet ist.

3. Antriebssystem (1) nach Anspruch 2,
wobei die Ruhestellung des Umschalt-Relais (16) dem Einphasen-Motor (M1a, M1b) entspricht, welcher häufiger verwendet wird.

4. Antriebssystem (1) nach einem der vorangehenden Ansprüche
mit einer Steuerungseinheit (17), welche ausgebildet und eingerichtet ist, die erste Halbbrücke (12) und die zweite Halbbrücke (13) zu betreiben.

5. Antriebssystem (1) nach Anspruch 4,
wobei die Steuerungseinheit (17) ausgebildet und eingerichtet ist, entweder
• mittels der ersten Halbbrücke (12) und der zweiten Halbbrücke (13) den ersten Einphasen-Motor (M1a) oder
• mittels der ersten Halbbrücke (12) und der zweiten Halbbrücke (13) den zweiten Einphasen-Motor (M1b)
zu betreiben.

6. Antriebssystem (1) nach einem der vorangehenden Ansprüche,
wobei die erste Halbbrücke (12) einen ersten Messwiderstand (R1) aufweist und/oder
wobei die zweite Halbbrücke (13) einen zweiten Messwiderstand (R2) aufweist.

7. Antriebssystem (1) nach Anspruch 4 oder 5 und nach Anspruch 6,
wobei die Steuerungseinheit (17) ausgebildet und eingerichtet ist, entweder
• den ersten Messwiderstand (R1) und den zweiten Messwiderstand (R2) zur Strommessung und zur Regelung des ersten Einphasen-Motors (M1a), oder
• den ersten Messwiderstand (R1) und den zweiten Messwiderstand (R2) zur Strommessung und zur Regelung des zweiten Einphasen-Motors (M1b), oder
• den ersten Messwiderstand (R1) oder den zweiten Messwiderstand (R2) zur Strommessung und zur Regelung des ersten oder des zweiten Einphasen-Motors (M1b)
zu verwenden.

8. Antriebssystem (1) nach einem der vorangehenden Ansprüche
ferner mit einem Gleichrichter (11), welcher ausgebildet und eingerichtet ist, eine Wechselspannung eines Spannungseingangs (10) des Antriebssystems (1) zu erhalten und eine Gleichspannung der ersten Halbbrücke (12) und der zweiten Halbbrücke (13) zur Verfügung zu stellen.

9. Antriebssystem (1) nach Anspruch 8,
ferner mit einem Glättungskondensator (C), welcher ausgebildet ist, die Gleichspannung des Ausgangs des Gleichrichters (11) zu glätten.

10. Antriebssystem (1) nach einem der vorangehenden Ansprüche,
wobei der erste Einphasen-Motor (M1a) ein erster Einphasen-, vorzugsweise permanenterregter, Synchronmotor (M1a) und/oder
der zweite Einphasen-Motor (M1b) ein zweiter Einphasen-, vorzugsweise permanenterregter, Synchronmotor (M1b) ist.

11. Haushaltsgerät, vorzugsweise Waschmaschine, Geschirrspüler, Backofen oder Dampfgarer,
mit wenigstens einem Antriebssystem (1) nach einem der vorangehenden Ansprüche.
